(19) **Europäisches Patentamt**
**European Patent Office**
**Office européen des brevets**

(11) **EP 4 105 803 B1**

(12) **EUROPEAN PATENT SPECIFICATION**

(45) Date of publication and mention
of the grant of the patent:
**25.10.2023   Bulletin 2023/43**

(21) Application number: **22178686.6**

(22) Date of filing: **13.06.2022**

(51) International Patent Classification (IPC):
**G06F 21/57** *(2013.01)*          **G06F 8/30** *(2018.01)*

(52) Cooperative Patent Classification (CPC):
**G06F 21/577; G06F 8/30;** G06F 9/453

(54) **METHOD AND SYSTEM FOR PERSONALIZED PROGRAMMING GUIDANCE USING DYNAMIC SKILL ASSESSMENT**

VERFAHREN UND SYSTEM ZUR PERSONALISIERTEN PROGRAMMIERFÜHRUNG MIT DYNAMISCHER FÄHIGKEITSBEWERTUNG

PROCÉDÉ ET SYSTÈME DE GUIDAGE DE PROGRAMMATION PERSONNALISÉ PAR ÉVALUATION DE COMPÉTENCE DYNAMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2021   IN 202121026459**

(43) Date of publication of application:
**21.12.2022   Bulletin 2022/51**

(73) Proprietor: **Tata Consultancy Services Limited**
**Mumbai 400021 Maharashtra (IN)**

(72) Inventors:
• **RAMGOPAL, VIVEKANAND**
**600017 Chennai - Tamil Nadu (IN)**
• **SESHADRI, ASHOK**
**600017 Chennai - Tamil Nadu (IN)**
• **LAKSHMANAN, ASHISHKUMAR**
**600017 Chennai - Tamil Nadu (IN)**
• **JEREMIAH, NAMITHA**
**600017 Chennai - Tamil Nadu (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A1-2020/003325      US-A1- 2008 046 860**
**US-A1- 2014 325 490**

**Description**

CROSS-REFERENCE TO RELATED APPLICATIONS AND PRIORITY

The present application claims priority to Indian application no. 202121026459, filed on June 14, 2021.

TECHNICAL FIELD

The disclosure herein generally relates to the field of blockchain technology and, more particular, to a method and system for personalized programming guidance by dynamic skill assessment of developers.

BACKGROUND

Due to rapid evolution of blockchain technology and the shortage of workforce with knowledge on blockchain programming languages and platform constructs, there is a need to incentivize blockchain programmers without penalizing their programming errors. Thus, a mechanism to provide personalized guidance by dynamic assessment of programming skills is needed to encourage blockchain programmers.

Conventional methods provide static analysis on the quality of code and provide suggestions towards improving the code quality. In the conventional methods, the assessment is based on the written code. Further, the conventional methods provide static guidelines at specific stages of development process and fails to provide personalized programming assistance to the developers. Hence providing personalized assistance to the developers based on dynamic skill assessment is challenging. Patent document US2014/325490 represents the closest prior art.

SUMMARY

Embodiments of the present disclosure present technological improvements as solutions to one or more of the above-mentioned technical problems recognized by the inventors in conventional systems. For example, in one embodiment, a method for personalized programming guidance using dynamic skill assessment is provided. The method includes receiving, by one or more hardware processors, a blockchain operation performed by a user. The blockchain operation include a plurality of actions, wherein the user is associated with a user profile comprising a user id, a current proficiency grade, an activity data, a grade data, an initial proficiency value and a current proficiency value, wherein each of the plurality of actions are associated with a corresponding weightage. Further, the method includes generating by one or more hardware processors, a match value based on a comparison between each of the plurality of actions and a plurality of predefined actions associated with the corresponding blockchain operation, wherein the generated match value is one of a: positive if there is a match between the plurality of actions and the plurality of predefined actions, and negative if there is no match between the plurality of actions and the plurality of predefined actions. Furthermore, the method includes updating by one or more hardware processors, the activity data based on the match value, wherein the activity data is a byte array comprising a plurality of bits, wherein each of the plurality of bits corresponds to each of the plurality of actions associated with the blockchain operation and, wherein a "1" in the byte array indicates a successful action and a "0" in the byte array represents an unsuccessful action. Furthermore, the method includes computing by one or more hardware processors, the activity grade based on the updated activity data and the corresponding weightage associated with each of the plurality of actions. Furthermore, the method includes evaluating by one or more hardware processors, the grade data based on the activity grade, wherein the grade data comprising the activity grade, a grade jump value, a usage value, a peer learning value and a peer appreciation value. Furthermore, the method includes computing by one or more hardware processors, a current proficiency value based on the initial proficiency value and the evaluated grade data. Furthermore, the method includes updating by one or more hardware processors, the current proficiency grade of the user based on the computed current proficiency value. Finally, the method includes generating by one or more hardware processors, a plurality of recommendations to the user based on the current proficiency grade when the match value is negative.

In another aspect, a system for personalized programming guidance using dynamic skill assessment is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a blockchain operation performed by a user. The blockchain operation include a plurality of actions, wherein the user is associated with a user profile comprising a user id, a current proficiency grade, an activity data, a grade data, an initial proficiency value and a current proficiency value, wherein each of the plurality of actions are associated with a corresponding weightage. Further, the one or more hardware processors are configured by the programmed instructions to generate a match value based on a comparison between each of the plurality of actions and a plurality of predefined actions associated with the corresponding blockchain operation, wherein the generated match value is one of a: positive if there is a match between the plurality of actions and the plurality of predefined actions, and negative if there is no match between the plurality of actions and the plurality of predefined actions. Furthermore, the one or more hardware processors are configured by the programmed instructions to update the activity data based on the match value, wherein the activity data is a byte array comprising a plurality of bits, wherein each of the plurality of bits corresponds to each of the plurality of actions associated with the blockchain operation and, wherein a "1" in the byte array indicates a successful action and a "0" in the byte array represents an unsuccessful action. Furthermore, the one or more hardware processors are configured by the programmed instructions to compute the activity grade based on the updated activity data and the corresponding weightage associated with each of the plurality of actions. Furthermore, the one or more hardware processors are configured by the programmed instructions to compute the grade data based on the activity grade, wherein the grade data comprising the activity grade, a grade jump value, a usage value, a peer learning value and a peer appreciation value. Furthermore, the one or more hardware processors are configured by the programmed instructions to compute a current proficiency value based on the initial proficiency value and the evaluated grade data. Furthermore, the one or more hardware processors are configured by the programmed instructions to update the current proficiency grade of the user based on the computed current proficiency value. Finally, the one or more hardware processors are configured by the programmed instructions to generate a plurality of recommendations to the user based on the current proficiency grade when the match value is negative.

In yet another aspect, a computer program product including a non-transitory computer-readable medium having embodied therein a computer program for personalized programming guidance using dynamic skill assessment is provided. The computer readable program, when executed on a computing device, causes the computing device to receive a blockchain operation performed by a user. The blockchain operation include a plurality of actions, wherein the user is associated with a user profile comprising a user id, a current proficiency grade, an activity data, a grade data, an initial proficiency value and a current proficiency value, wherein each of the plurality of actions are associated with a corresponding weightage. Further, the computer readable program, when executed on a computing device, causes the computing device to generate a match value based on a comparison between each of the plurality of actions and a plurality of predefined actions associated with the corresponding blockchain operation, wherein the generated match value is one of a: positive if there is a match between the plurality of actions and the plurality of predefined actions, and negative if there is no match between the plurality of actions and the plurality of predefined actions. Furthermore, the computer readable program, when executed on a computing device, causes the computing device to update the activity data based on the match value, wherein the activity data is a byte array comprising a plurality of bits, wherein each of the plurality of bits corresponds to each of the plurality of actions associated with the blockchain operation and, wherein a "1" in the byte array indicates a successful action and a "0" in the byte array represents an unsuccessful action. Furthermore, the computer readable program, when executed on a computing device, causes the computing device to compute the activity grade based on the updated activity data and the corresponding weightage associated with each of the plurality of actions. Furthermore, the computer readable program, when executed on a computing device, causes the computing device to compute the grade data based on the activity grade, wherein the grade data comprising the activity grade, a grade jump value, a usage value, a peer learning value and a peer appreciation value. Furthermore, the computer readable program, when executed on a computing device, causes the computing device to compute a current proficiency value based on the initial proficiency value and the evaluated grade data. Furthermore, the computer readable program, when executed on a computing device, causes the computing device to update the current proficiency grade of the user based on the computed current proficiency value. Finally, the computer readable program, when executed on a computing device, causes the computing device to generate a plurality of recommendations to the user based on the current proficiency grade when the match value is negative.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a functional block diagram of a system for personalized programming guidance using dynamic skill assessment, in accordance with some embodiments of the present disclosure.
FIGS. 2A and 2B are exemplary flow diagrams illustrating a method for personalized programming guidance using dynamic skill assessment, implemented by the system of FIG. 1, in accordance with some embodiments of the present disclosure.
FIG. 3 is an exemplary architecture for the processor implemented method for personalized programming guidance using dynamic skill assessment implemented by the system of FIG. 1, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments herein provide a method and system for personalized programming guidance using dynamic skill assessment for providing coding assistance to block chain developers. It helps enterprises to quickly build and deploy blockchain solutions in a flexible, scalable, and efficient manner. Initially, the system receives a plurality of actions associated with a blockchain operation performed by a user. In an embodiment, the user is a blockchain developer. The plurality of actions associated with the blockchain operation are compared with a plurality of predefined corresponding actions stored in a corresponding repository. Further, an activity data associated with the user is updated based on plurality of actions if there is no match between each of the plurality of actions and a plurality of predefined actions associated with the corresponding blockchain operation. Further, an activity grade is computed based on the activity data and a corresponding weightage associated with each of the plurality of actions. A grade data associated with the user is evaluated based on the activity grade. Further, a current proficiency value is computed based on an initial proficiency score and the evaluated grade data. A current proficiency grade of the user is updated based on the current proficiency value. Finally, a plurality of recommendations is generated to the user based on the current proficiency grade.

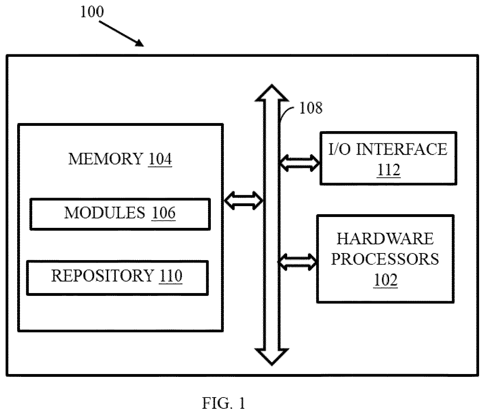

Referring now to the drawings, and more particularly to FIGS. 1 through 3, where similar reference characters denote corresponding features consistently throughout the figures, there are shown preferred embodiments and these embodiments are described in the context of the following exemplary system and/or method.

FIG. 1 is a functional block diagram of a system 100 for personalized programming guidance using dynamic skill assessment, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106. The repository 110 further includes a knowledge repository, error repository and a metadata repository.

The plurality of modules 106 include programs or coded instructions that supplement applications or functions performed by the system 100 for personalized programming guidance using dynamic skill assessment. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for personalized programming guidance using dynamic skill assessment. In an embodiment, plurality of modules 106 includes an observer module (not shown in FIG. 1), an analyzer module (not shown in FIG. 1) and a feedback module (not shown in FIG. 1).

The data repository (or repository) 110 may include a plurality of abstracted piece of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (not shown in FIG. 1) communicatively coupled to the system 100. The data contained within such external database may be periodically updated. For example, new data may be added into the database (not shown in FIG. 1) and/or existing data may be modified and/or non-useful data may be deleted from the database (not shown in FIG. 1). In one example, the data may be stored in an external system, such as a Lightweight Directory Access Protocol (LDAP) directory and a Relational Database Management System (RDBMS).

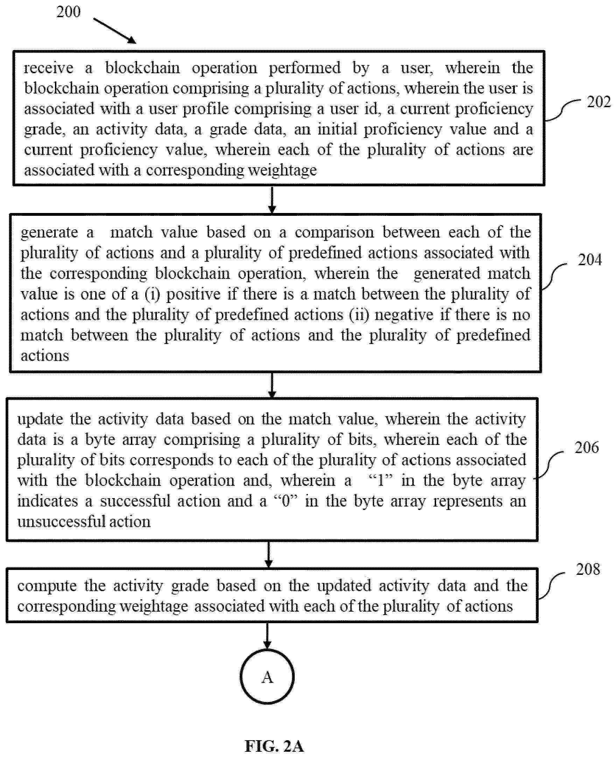

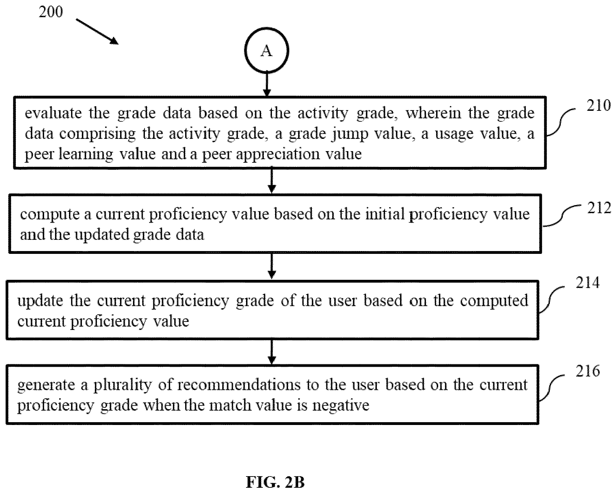

FIGS. 2A and 2B are exemplary flow diagrams illustrating a method 200 for personalized programming guidance using dynamic skill assessment implemented by the system of FIG. 1 according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of the method 200 of the present disclosure will now be explained with reference to the components or blocks of the system 100 as depicted in FIG. 1 and the steps of flow diagram as depicted in FIG. 2A and 2B. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of the method 200, the one or more hardware processors 102 are configured by the programmed instructions to receive a blockchain operation performed by a user. The blockchain operation includes a plurality of actions that comprises smart contract creation, compilation, and deployment onto the underlying blockchain platform. Each of the plurality of actions are associated with a corresponding weightage. The user for example, a blockchain developer is associated with a user profile including a user id, a current proficiency grade, an activity data, a grade data, an initial proficiency value and a current proficiency value. For example, the blockchain operation is "creating smart contract" and the plurality of actions includes defining a smart contract, defining attributes, defining validations/flows, defining the Blockchain environment to deploy the smart contracts and the like.

The initial proficiency value of the user profile is pre-computed based on an initial assessment of the user. The initial assessment is performed as explained below. Initially, a project specification information associated with the user is received. Further, a plurality of project specific questionnaire is generated based on the project specification information. Further, a response is obtained from the user for the plurality project specific questionnaire. Further, the initial proficiency value associated with the user is computed based on the obtained response. For example, the plurality project specific questionnaires and the expected answers are shown in Table I.

Table I

| Project specific questionnaire | Options |
|---|---|
| How familiar are you with blockchain | 1. I am a novice<br>2. I have basic knowledge<br>3. I have intermediate knowledge<br>4. I am an advanced user<br>5. I am an expert |
| Do you have experience with Smart Contract Development IDEs | 1. Yes (If yes, please specify the name of the IDE)<br>2. No |
| If you have used Smart Contract Development IDEs, then select the purpose of usage | 1. Smart Contract Development<br>2. Smart Contract Deployment<br>3. Smart Contract Packaging<br>4. Not Applicable |

(continued)

| Project specific questionnaire | Options |
|---|---|
| Select the blockchain platforms you have worked with | 1. HyperLedger Fabric<br>2. R3Corda<br>3. Ethereum<br>4. Others (Enter the platform name) |
| Have you written any Smart Contracts | 1. Yes (If yes, please specify for which blockchain platform)<br>2. No |
| Have you setup any Blockchain Platform | 1. Yes (If yes, please specify the name of the platform)<br>2. No |
| Have you performed any blockchain transactions | 1. Yes (If yes, please specify the name of the platform)<br>2. No |
| Have you developed client applications that work with Blockchain technology | 1. Yes (If yes, please specify the name of the platform)<br>2. No |
| Have you used any SDKs | 1. Yes (If yes, please specify the name of the SDK)<br>2. No |
| Are you familiar with any version control software | 1. Yes (If yes, please specify the one you have used)<br>2. No |

In an embodiment, the user is provided with an initial assessment band based on the range given in Table II. For example, if the user answers 2 out 10 questions, resulting in a scoring of 20% and current ranking is set as 20% and grade is set as 1.

Table II

| Initial assessment band | Grade |
|---|---|
| <=25% | grade 1 |
| > 25% and < 50% | grade 2 |
| >= 50% and <75% | grade 3 |
| >= 75% and <90% | grade 4 |
| >=90% and <=100% | grade 5 |

At step 204 of the method 200, the one or more hardware processors 102 are configured by the programmed instructions to generate a match value based on a comparison between each of the plurality of actions and a plurality of predefined actions associated with the corresponding blockchain operation. The generated match value is one of a: (i) positive if there is a match between the plurality of actions and the plurality of predefined actions, and (ii) negative if there is no match between the plurality of actions and the plurality of predefined actions. An error repository is updated dynamically with a plurality of errors committed by the user at current instance when the match value is negative.

In an embodiment, dynamically updating the knowledge repository when the match value is negative includes the following steps. Initially, a plurality of user errors and the corresponding plurality of recommendations provided to the user are received. The plurality of user errors is committed by the user. Further, each of the plurality of user errors and a plurality of errors stored in the error repository using a string matching technique. For example, if user enters a Smart contract name 'AB', system will throw an error: "Smart Contract name is too short". Analyzer name will check whether the error "Smart Contract name is too short" exists in the Error Repository. If not, it will create a new Entry. If exists, then it will not make any entry into the repository. Further, the error repository is updated with each of the plurality of user errors when there is no match between each of the plurality of user errors and the plurality of errors stored in the error repository. Simultaneously, the corresponding plurality of recommendations associated with the each of the plurality of user errors are updated in the error repository.

At step 206 of the method 200, the one or more hardware processors 102 are configured by the programmed instructions to update the activity data based on the match value. The activity data is a byte array comprising a plurality of bits. Each of the plurality of bits corresponds to each of the plurality of actions associated with the blockchain operation. A "1" in the byte array indicates a successful action and a "0" in the byte array represents an unsuccessful action. An example byte array/activity data is given in Table III. This sample will create a byte array of 0000 for each new developer since there are 4 service positions as shown in the below table III.

Table III

| Blockchain Operation | Service Position |
|---|---|
| Define Smart contract | 1 |
| Define Attribute | 2 |
| Define validation | 3 |
| Define environment | 4 |
| ..... | ..... |

At step 208 of the method 200, the one or more hardware processors 102 are configured by the programmed instructions to compute the activity grade based on the updated activity data and the corresponding weightage associated with each of the plurality of actions. The weightage value is predetermined based on a complexity associated with each of the plurality of actions. For example, the weightage for each of the plurality of actions associated with the block chain operation are given in Table 3. Now referring to Table IV, creation of a smart contract includes different operations like defining smart contract, defining attributes, defining validations that are part of the smart contract, specifying the environment in which the smart contract would be deployed. Every operation is associated with a positive score (which would be assigned when the programmer performs the operation correctly) and a negative score (which would be assigned when a programmer commits an error with respect to the blockchain operation).

Table IV

| Block chain operation | Weightage | +ve score | -ve score |
|---|---|---|---|
| Define Smart contract | 1 | 1 | 0.25 |
| Define Attribute | 0.1 | 1 | 0.25 |
| Define validation | 1 | 1 | 0.25 |
| Define environment | 5 | 1 | 0.25 |
| .... | | | |

At step 210 of the method 200, the one or more hardware processors 102 are configured by the programmed instructions to evaluate the grade data based on the activity grade. The grade data includes the activity grade, a grade jump value, a usage value, a peer learning value and a peer appreciation value. The peer learning value is provided to the user when a suggestion given by the user for structuring the plurality of recommendations to a user is included into a knowledge repository. The peer appreciation value is provided to the user while receiving an appreciation from at least one user from a plurality of other users for contribution towards the knowledge repository. The grade jump value is computed based on a plurality of consecutive correct programming operation performed by the user. The usage value is computed based on a number of tangible actions performed by the user in a tool associated with the blockchain operations. For example, the formula for computing the grade data is given in equation (1).

$$Grade\ data = w1 * score\ +\ the\ level\ jump\ value\ +$$

$$the\ usage\ bonus\ +\ the\ peer\ learning\ value\ +$$

$$peer\ appreciation\ value \ldots\ldots\ldots\ldots\ldots\ldots\ldots\ (1)$$

In an embodiment, the grade jump value for each of the plurality of actions associated with a blockchain operation is given in Table V.

Table V

| Blockchain Actions | Consecutive success count | Grade jump value |
|---|---|---|
| Define Smart contract | 5 | 1 |
| Define Attribute | 10 | 1 |
| Define validation | 5 | 1 |
| Define environment | | 1 |
| .... | | |

In an embodiment, an example usage value is given in Table VI and the example peer learning value and the peer appreciation value are given in Table VII.

Table VI

| Usage | Usage Bonus |
|---|---|
| 2 hours | 1 |

Table VII

| Blockchain Actions | peer learning value | Peer appreciation value |
|---|---|---|
| Define Smart contract | 1 | 0.1 per appreciation |
| Define Attribute | 1 | 0.1 per appreciation |

At step 212 of the method 200, the one or more hardware processors 102 are configured by the programmed instructions to compute a current proficiency value based on the initial proficiency value and the evaluated grade data using the formula given in equation (2).

$$current\ proficiency\ value = \ initial\ proficiency\ value\ +\ w1 * mark\ +$$

$$the\ level\ jump\ value\ +\ the\ usage\ bonus\ +\ the\ peer\ learning\ value\ +$$

$$peer\ appreciation\ value \ldots\ldots\ldots\ldots\ (2)$$

At step 214 of the method 200, the one or more hardware processors 102 are configured by the programmed instructions to update the current proficiency grade of the user based on the computed current proficiency value. For example, if the current proficiency value was 20, the corresponding grade assigned would be Grade 1. Now, after re-computation, if the current proficiency value is 26, then the current proficiency grade would be Grade 2. A sample mapping of current proficiency value and current proficiency grade is shown in Table VIII.

Table VIII

| Current proficiency value | Current proficiency grade |
|---|---|
| <=25 | Grade 1 |
| > 25 and <= 50 | Grade 2 |

(continued)

| Current proficiency value | Current proficiency grade |
|---|---|
| > 50 and <=75 | Grade 3 |
| > 75 and <=90 | Grade 4 |
| >90 and <=100 | Grade 5 |

At step 216 of the method 200, the one or more hardware processors 102 are configured by the programmed instructions to generate a plurality of recommendations to the user based on the current proficiency grade when the match value is negative. For example, for a particular blockchain operation like "creating smart contract", if the user commits some errors, the plurality of recommendations are, smart Contract Name must have minimum of 3 characters, smart contract name must start with an uppercase alphabet, smart contract name must contain only alphanumeric characters, validation name must start with an alphabet, validation name must contain only alphanumeric characters and email address provided is invalid and the like.

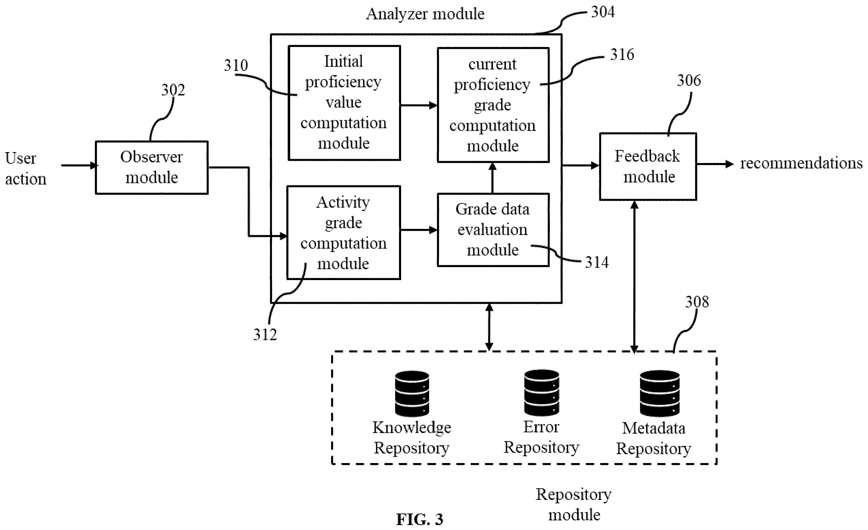

FIG. 3 illustrates an overall architecture for the processor implemented method for personalized programming guidance using dynamic skill assessment implemented by the system of FIG. 1, in accordance with some embodiments of the present disclosure. Now referring to FIG. 3, the architecture includes an observer module 302, an analyzer module 304, a feedback module 306 and a repository module 308. The observer module 302 progressively monitors user's coding patterns and the analyzer module 304 dynamically evaluates the proficiency grade of the user. The dynamically evaluated proficiency grade is provided as input to the feedback module 306. The feedback module 306 provides the plurality of recommendations to the user based on the evaluated proficiency grade.

The analyzer module 304 includes an initial proficiency value computation module 310, an activity grade computation module 312, a grade data evaluation module 314 and a current proficiency grade computation module 316. The activity grade is computed by the activity grade computation module 312 based on the activity data associated with the user, wherein the activity data is updated based on the plurality of actions associated with the blockchain operation. Further, the grade data is evaluated based on the activity grade by the grade data evaluation module 314. The evaluated grade data from the grade data evaluation module 314 and the initial proficiency value from the initial proficiency value computation module 310 are used for computing the current proficiency grade by the current proficiency grade computation module 316.

In an embodiment, the initial proficiency value is computed based on user profiling questionnaire which contains 10 questions. For example, if user answers 2 out 10 questions, resulting in a scoring of 20% and current ranking is set as 20% and grade is set as 1. Ranking for each platform will be set as 20% and grade 1 as first level questions are independent of platforms. The analyzer module 304 stores all steps that can be performed on the blockchain application toolkit along with weightage and marks. Marks can be positive and negative depending on the outcome of each of the plurality of action. Each of the plurality of action is having a weightage depending on the complexity of the action. The current proficiency grade of the user is dynamically computed based on each of the plurality of actions and the corresponding weightage. For example, if the user has successfully defined smart contract and 5 attributes, but rule validation results in error, this will set the current ranking as 20 + 1*1 + 5*0.1*1 - 1*0.25 =21.25, wherein '20' refers to initial proficiency value computed based on the plurality of project specific questionnaire. The first '1' in "1 *1" refers to weightage and the second '1' refers to score (1 for successful execution) for the first action. In "5*0.1*1", '5' refers to the number of attributes defined (second action), '0.1' refers to the weightage assigned and '1' refers to the score assigned for performing the action correctly. In "1 *0.25", '1' refers to the weightage assigned to the third action and "-0.25" refers to the negative score for making an error in the third action.

The feedback module 306 structures the level of guidance to the user by providing the plurality of recommendations based on the current proficiency grade computed by the analyzer module 304. The user is given recommendation based on the current proficiency grade when a step is initiated detailing the process that would alert them with the procedure. This avoids incorrect action being taken. If the action was successfully done by the user in the previous attempt, such prompts will not be given as the user has cleared the level. This is achieved by setting the action data corresponding to the action as one. If the user commits an error, which was previously successful, grade of the user will be degraded, and recommendations will be put in place again. The system further includes a Chatbot which is capable of answering user query regarding any procedure to be used while performing blockchain operations avoid any incorrect steps.

In an embodiment, the repository module 308 includes the knowledge repository, the error repository and the metadata repository. The metadata repository stores the metadata associated with the feedback module is given in Table IX.

Table IX

| Blockchain Actions | Failure RCA | Recommendation |
|---|---|---|
| Define Smart contract | Incorrect value | Alert correct procedure |
| Define Smart contract | Incorrect definition | Alert correct procedure |
| Define Attribute | Invalid business domain | Propose right domain |

When a developer uses the blockchain application toolkit for the first time, as part of Initial Evaluation, the repository module 308 generates the user profile based on the entries available in the metadata repository in the Feedback Module. The user profile includes the user id, the current proficiency grade, the activity data, the grade data, the initial proficiency value and the current proficiency value.

All feedback repository line items for the developer would be initially marked as 0, which indicates that the developer has not encountered that function in the past, or the developer had committed a mistake in the previous attempt. During Progressive Evaluation, if the developer tries to perform an action, defined in the feedback repository.

The feedback module 306 checks whether the entry is 0 or 1 for the action. If it is 0, system displays a list of possible errors and proactively alerts the user to follow the right process and then updates the entry to 1 (this means since the guidance has already been provided, the user is supposed to be aware of this action and is not supposed to commit an error in future). If the feedback module finds a 1 against the action, (which means the developer has previously gone through the action, but is making an error), the feedback module downgrades the proficiency grade of the developer and updates the entry to '0'. The developer will again be guided with the list of possible errors and if the developer performs the step correctly, the feedback module updates the entry to '1' again.

In an embodiment, if the user is a junior developer who logs into blockchain application toolkit for the first time and feedback module automatically does a profiling for the user marking the activity data associated with the user with Boolean value as 0 which indicates that the user has not attempted any of these plurality of actions associated with the blockchain operation previously. When the user tries to define a smart contract attribute, the user will get an automatic help information with recommendation as below, which will enable the user to do the smart contract definition correctly in the first attempt. This will result in analyzer module updating user's activity data for defining the smart contract as 1. For example, the help information includes the following statement, Smart Contract Name must have minimum of 3 characters, Smart Contract Name must start with an uppercase alphabet and Smart Contract Name must contain only alphanumeric characters. During the process, if the user makes a mistake, the activity value corresponding to the erroneous action from the plurality of actions associated with the blockchain operation will be toggled to 0 indicating the mistake and the automatic alert will be enabled only for that function. Once the user reaches the professional cut-off score, then alerts will be automatically suppressed. Any new functionality (feature) released in the blockchain application toolkit will still be logged with activity data set to as 0 which means the user would require some guidance on new feature and once the task is attempted profile value will be toggled to 1 automatically.

The written description describes the subject matter herein to enable any person skilled in the art to make and use the embodiments.

The embodiments of present disclosure herein address the unresolved problem of personalized programming guidance using dynamic skill assessment. The present disclosure pertains to dynamic assistance to the developer during development. Further, the invention comes with an ability to assess the intelligence level of the developer and to adjust the level of prompts accordingly. In addition, based on how the developer responds to the prompts, the invention updates its internal repository and uses this data for subsequent assistance to the developer. The invention is intuitive with inbuilt intelligence that not only ensures high code quality but also perform while the development is in progress. This provides the twin benefits of reduction of technical defects in the code and enhancement of developers coding skills. Furthermore, the idea that the invention can be applied to a promising and fast evolving technology such as blockchain, strengthens the need for such a tool in the market.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of protection being indicated by the following claims.

## Claims

1. A processor implemented method (200), the method comprising:

   receiving (202), by one or more hardware processors, a blockchain operation performed by a user, wherein the blockchain operation comprising a plurality of actions, wherein the user is associated with a user profile comprising a user id, a current proficiency grade, an activity data, a grade data, an initial proficiency value and a current proficiency value, wherein each of the plurality of actions are associated with a corresponding weightage;
   generating (204), by the one or more hardware processors, a match value based on a comparison between each of the plurality of actions and a plurality of predefined actions associated with the corresponding blockchain operation, wherein the generated match value is one of a:

      positive if there is a match between the plurality of actions and the plurality of predefined actions, and
      negative if there is no match between the plurality of actions and the plurality of predefined actions;

   updating (206), by the one or more hardware processors, the activity data based on the match value, wherein the activity data is a byte array comprising a plurality of bits, wherein each of the plurality of bits corresponds to each of the plurality of actions associated with the blockchain operation and, wherein a "1" in the byte array indicates a successful action and a "0" in the byte array represents an unsuccessful action;
   computing (208), by the one or more hardware processors, the activity grade based on the updated activity data and the corresponding weightage associated with each of the plurality of actions;
   evaluating (210), by the one or more hardware processors, the grade data based on the activity grade, wherein the grade data comprising the activity grade, a grade jump value, a usage value, a peer learning value and a peer appreciation value;
   computing (212), by the one or more hardware processors, a current proficiency value based on the initial proficiency value and the evaluated grade data;
   updating (214), by the one or more hardware processors, the current proficiency grade of the user based on the computed current proficiency value; and
generating (216), by the one or more hardware processors, a plurality of recommendations to the user based on the current proficiency grade when the match value is negative.

2. The method of claim 1, wherein the initial proficiency value is pre-computed based on an initial assessment of the user by:

receiving a project specification information associated with the user;
generating a plurality of project specific questionnaire based on the project specification information;
obtaining a response from the user for the plurality project specific questionnaire; and
computing the initial proficiency value associated with the user based on the obtained response.

3. The method of claim 1, wherein the peer learning value is provided to the user when a suggestion given by the user for structuring the plurality of recommendations to the user is included into a knowledge repository and, wherein the peer appreciation value is provided to the user while receiving an appreciation from at least one user from a plurality of other users for contribution towards the knowledge repository.

4. The method of claim 1, wherein the grade jump value is computed based on a plurality of consecutive correct programming operation performed by the user.

5. The method of claim 1, wherein the usage value is computed based on a number of tangible actions performed by the user in a tool associated with the blockchain operations.

6. The method of claim 1, wherein the weightage value is predetermined based on complexity associated with each of the plurality of actions and, wherein an error repository is updated dynamically when the match value is negative.

7. The method of claim 1 further comprising updating the knowledge repository dynamically when the match value is negative comprising:

receiving a plurality of user errors and the corresponding plurality of recommendations provided to the user, wherein the plurality of user errors is committed by the user;
comparing each of the plurality of user errors and a plurality of errors stored in the error repository using a pattern matching technique;
updating the error repository with each of the plurality of user errors when there is no match between each of the plurality of user errors and the plurality of errors stored in the error repository; and
simultaneously updating the corresponding plurality of recommendations associated with the each of the plurality of user errors in the error repository.

8. A system (100) further comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive a blockchain operation performed by a user, wherein the blockchain operation further comprising a plurality of actions, wherein the user is associated with a user profile comprising a user id, a current proficiency grade, an activity data, a grade data, an initial proficiency value and a current proficiency value, wherein each of the plurality of actions are associated with a corresponding weightage;
generate a match value based on a comparison between each of the plurality of actions and a plurality of predefined actions associated with the corresponding blockchain operation, wherein the generated match value is one of a:

positive if there is a match between the plurality of actions and the plurality of predefined actions, and negative if there is no match between the plurality of actions and the plurality of predefined actions;

update the activity data based on the match value, wherein the activity data is a byte array further comprising a plurality of bits, wherein each of the plurality of bits corresponds to each of the plurality of actions associated with the blockchain operation and, wherein a "1" in the byte array indicates a successful action and a "0" in the byte array represents an unsuccessful action;

compute the activity grade based on the updated activity data and the corresponding weightage associated with each of the plurality of actions;

evaluate the grade data based on the activity grade, wherein the grade data further comprising the activity grade, a grade jump value, a usage value, a peer learning value and a peer appreciation value;

compute a current proficiency value based on the initial proficiency value and the evaluated grade data;

update the current proficiency grade of the user based on the computed current proficiency value; and

generate a plurality of recommendations to the user based on the current proficiency grade when the match value is negative.

9. The system of claim 8, wherein the initial proficiency value is pre-computed based on an initial assessment of the user by:

receiving a project specification information associated with the user;

generating a plurality of project specific questionnaire based on the project specification information;

obtaining a response from the user for the plurality project specific questionnaire; and

computing the initial proficiency value associated with the user based on the obtained response.

10. The system of claim 8, wherein the peer learning value is provided to the user when a suggestion given by the user for structuring the plurality of recommendations to the user is included in to a knowledge repository and, wherein the peer appreciation value is provided to the user while receiving an appreciation from at least one user from a plurality of other users for contribution towards the knowledge repository.

11. The system of claim 8, wherein the grade jump value is computed based on a plurality of consecutive correct programming operation performed by the user.

12. The system of claim 8, wherein the usage value is computed based on a number of tangible actions performed by the user in a tool associated with the blockchain operations and, wherein the weightage value is predetermined based on complexity associated with each of the plurality of actions.

13. The system of claim 8, wherein an error repository is updated dynamically when the match value is negative.

14. The system of claim 8, further comprising updating the knowledge repository dynamically when the match value is negative comprising:

receiving a plurality of user errors and the corresponding plurality of recommendations provided to the user, wherein the plurality of user errors is committed by the user;

comparing each of the plurality of user errors and a plurality of errors stored in the error repository using a pattern matching technique;

updating the error repository with each of the plurality of user errors when there is no match between each of the plurality of user errors and the plurality of errors stored in the error repository; and

simultaneously updating the corresponding plurality of recommendations associated with the each of the plurality of user errors in the error repository.

15. One or more non-transitory machine-readable information storage mediums comprising one or more instructions which when executed by one or more hardware processors cause:

receiving a blockchain operation performed by a user, wherein the blockchain operation comprising a plurality of actions, wherein the user is associated with a user profile comprising a user id, a current proficiency grade, an activity data, a grade data, an initial proficiency value and a current proficiency value, wherein each of the plurality of actions are associated with a corresponding weightage;

generating a match value based on a comparison between each of the plurality of actions and a plurality of predefined actions associated with the corresponding blockchain operation, wherein the generated match value is one of a:

positive if there is a match between the plurality of actions and the plurality of predefined actions, and negative if there is no match between the plurality of actions and the plurality of predefined actions;

updating the activity data based on the match value, wherein the activity data is a byte array comprising a plurality of bits, wherein each of the plurality of bits corresponds to each of the plurality of actions associated with the blockchain operation and, wherein a "1" in the byte array indicates a successful action and a "0" in the byte array represents an unsuccessful action;

computing the activity grade based on the updated activity data and the corresponding weightage associated with each of the plurality of actions;

evaluating the grade data based on the activity grade, wherein the grade data comprising the activity grade, a grade jump value, a usage value, a peer learning value and a peer appreciation value;

computing a current proficiency value based on the initial proficiency value and the evaluated grade data;

updating the current proficiency grade of the user based on the computed current proficiency value; and

generating a plurality of recommendations to the user based on the current proficiency grade when the match value is negative.

**Patentansprüche**

1. Prozessorimplementiertes Verfahren (200), wobei das Verfahren umfasst:

Empfangen (202), durch einen oder mehrere Hardwareprozessoren, einer Blockchain-Operation, die von einem Benutzer durchgeführt wird, wobei die Blockchain-Operation eine Vielzahl von Aktionen umfasst, wobei der Benutzer mit einem Benutzerprofil assoziiert ist, das eine Benutzer-ID, einen aktuellen Leistungsgrad, Aktivitätsdaten, Stufendaten, einen anfänglichen Leistungswert und einen aktuellen Leistungswert umfasst, wobei jede der Vielzahl von Aktionen mit einer entsprechenden Gewichtung assoziiert ist;

Erzeugen (204), durch den einen oder die mehreren Hardwareprozessoren, eines Übereinstimmungswerts basierend auf einem Vergleich zwischen jeder der Vielzahl von Aktionen und einer Vielzahl von vordefinierten Aktionen, die mit der entsprechenden Blockchain-Operation assoziiert sind, wobei der erzeugte Übereinstimmungswert eines ist von:

positiv, wenn es eine Übereinstimmung zwischen der Vielzahl von Aktionen und der Vielzahl von vordefinierten Aktionen gibt, und

negativ, wenn es keine Übereinstimmung zwischen der Vielzahl von Aktionen und der Vielzahl von vordefinierten Aktionen gibt;

Aktualisieren (206), durch den einen oder die mehreren Hardwareprozessoren, der Aktivitätsdaten basierend auf dem Übereinstimmungswert, wobei die Aktivitätsdaten ein Byte-Array sind, das eine Vielzahl von Bits umfasst, wobei jedes der Vielzahl von Bits jeder der Vielzahl von Aktionen entspricht, die mit der Blockchain-Operation assoziiert sind, und wobei eine "1" in dem Byte-Array eine erfolgreiche Aktion angibt und eine "0" in dem Byte-Array eine nicht erfolgreiche Aktion darstellt;

Berechnen (208), durch den einen oder die mehreren Hardwareprozessoren, des Aktivitätsgrads basierend auf den aktualisierten Aktivitätsdaten und der entsprechenden Gewichtung, die mit jeder der Vielzahl von Aktionen assoziiert ist;

Auswerten (210), durch den einen oder die mehreren Hardwareprozessoren, der Graddaten basierend auf dem Aktivitätsgrad, wobei die Graddaten den Aktivitätsgrad, einen Gradsprungwert, einen Nutzungswert, einen Peer-Lernwert und eine Peer-Wertschätzung umfassen;

Berechnen (212), durch den einen oder die mehreren Hardwareprozessoren, eines aktuellen Leistungswerts basierend auf dem anfänglichen Leistungswert und den ausgewerteten Graddaten;

Aktualisieren (214), durch den einen oder die mehreren Hardwareprozessoren, des aktuellen Leistungsgrads des Benutzers basierend auf dem berechneten aktuellen Leistungswert; und

Erzeugen (216), durch den einen oder die mehreren Hardwareprozessoren, einer Vielzahl von Empfehlungen an den Benutzer basierend auf dem aktuellen Leistungsgrad, wenn der Übereinstimmungswert negativ ist.

2. Verfahren nach Anspruch 1, wobei der anfängliche Leistungswert basierend auf einer anfänglichen Beurteilung des Benutzers durch Folgendes vorberechnet wird:

Empfangen von Projektspezifikationsinformationen, die dem Benutzer zugeordnet sind;

Erzeugen einer Vielzahl von projektspezifischen Fragebögen basierend auf den Projektspezifikationsinformationen;

Erhalten einer Antwort von dem Benutzer für die Vielzahl von projektspezifischen Fragebögen; und

Berechnen des anfänglichen Leistungswerts, der dem Benutzer zugeordnet ist, basierend auf der erhaltenen Antwort.

3. Verfahren nach Anspruch 1, wobei der Peer-Lernwert dem Benutzer bereitgestellt wird, wenn ein Vorschlag, der durch den Benutzer zum Strukturieren der Vielzahl von Empfehlungen an den Benutzer gegeben wird, in einem Wissensspeicher enthalten ist, und wobei die Peer-Wertschätzung dem Benutzer bereitgestellt wird, während eine Bewertung von mindestens einem Benutzer aus einer Vielzahl von anderen Benutzern für einen Beitrag zu dem Wissensspeicher empfangen wird.

4. Verfahren nach Anspruch 1, wobei der Gradsprungwert basierend auf einer Vielzahl von aufeinanderfolgenden korrekten Programmieroperationen berechnet wird, die durch den Benutzer durchgeführt werden.

5. Verfahren nach Anspruch 1, wobei der Nutzungswert basierend auf einer Anzahl von greifbaren Aktionen berechnet wird, die durch den Benutzer in einem Werkzeug durchgeführt werden, das den Blockchain-Operationen zugeordnet ist.

6. Verfahren nach Anspruch 1, wobei der Gewichtungswert basierend auf einer Komplexität vorbestimmt wird, die jeder der Vielzahl von Aktionen zugeordnet ist, und wobei ein Fehlerspeicher dynamisch aktualisiert wird, wenn der Übereinstimmungswert negativ ist.

7. Verfahren nach Anspruch 1, ferner umfassend das dynamische Aktualisieren des Wissensspeichers, wenn der Übereinstimmungswert negativ ist, umfassend:

   Empfangen einer Vielzahl von Benutzerfehlern und der entsprechenden Vielzahl von Empfehlungen, die dem Benutzer bereitgestellt werden, wobei die Vielzahl von Benutzerfehlern durch den Benutzer festgeschrieben wird;
   Vergleichen jedes der Vielzahl von Benutzerfehlern und einer Vielzahl von Fehlern, die in dem Fehlerspeicher gespeichert sind, unter Verwendung einer Musterübereinstimmungstechnik;
   Aktualisieren des Fehlerspeichers mit jedem der Vielzahl von Benutzerfehlern, wenn es keine Übereinstimmung zwischen jedem der Vielzahl von Benutzerfehlern und der Vielzahl von Fehlern gibt, die in dem Fehlerspeicher gespeichert sind; und
   gleichzeitiges Aktualisieren der entsprechenden Vielzahl von Empfehlungen, die jedem der Vielzahl von Benutzerfehlern im Fehlerspeicher zugeordnet sind.

8. System (100), ferner umfassend:
   mindestens einen Speicher (104), der programmierte Anweisungen speichert; eine oder mehrere Eingabe/Ausgabe(E/A)-Schnittstellen (112); und einen oder mehrere Hardwareprozessoren (102), die mit dem mindestens einen Speicher (104) wirkverbunden sind, wobei der eine oder die mehreren Hardwareprozessoren (102) durch die programmierten Anweisungen konfiguriert sind zum:

   Empfangen einer Blockchain-Operation, die von einem Benutzer durchgeführt wird, wobei die Blockchain-Operation ferner eine Vielzahl von Aktionen umfasst, wobei der Benutzer mit einem Benutzerprofil assoziiert ist, das eine Benutzer-ID, einen aktuelle Leistungsgrad, Aktivitätsdaten, Stufendaten, einen anfänglichen Leistungswert und einen aktuellen Leistungswert umfasst, wobei jede der Vielzahl von Aktionen mit einer entsprechenden Gewichtung assoziiert ist;
   Erzeugen eines Übereinstimmungswerts basierend auf einem Vergleich zwischen jeder der Vielzahl von Aktionen und einer Vielzahl von vordefinierten Aktionen, die mit der entsprechenden Blockchain-Operation assoziiert sind, wobei der erzeugte Übereinstimmungswert eines ist von:

      positiv, wenn es eine Übereinstimmung zwischen der Vielzahl von Aktionen und der Vielzahl von vordefinierten Aktionen gibt, und
      negativ, wenn es keine Übereinstimmung zwischen der Vielzahl von Aktionen und der Vielzahl von vordefinierten Aktionen gibt;

   Aktualisieren der Aktivitätsdaten basierend auf dem Übereinstimmungswert, wobei die Aktivitätsdaten ein Byte-Array sind, das ferner eine Vielzahl von Bits umfasst, wobei jedes der Vielzahl von Bits jeder der Vielzahl von Aktionen entspricht, die mit der Blockchain-Operation assoziiert sind, und wobei eine "1" in dem Byte-Array eine erfolgreiche Aktion angibt und eine "0" in dem Byte-Array eine nicht erfolgreiche Aktion darstellt;
   Berechnen des Aktivitätsgrads basierend auf den aktualisierten Aktivitätsdaten und der entsprechenden Gewichtung, die mit jeder der Vielzahl von Aktionen assoziiert ist;

Auswerten der Graddaten basierend auf dem Aktivitätsgrad, wobei die Graddaten ferner den Aktivitätsgrad, einen Gradsprungwert, einen Nutzungswert, einen Peer-Lernwert und einen Peer-Wertschätzung umfassen;

Berechnen eines aktuellen Leistungswerts basierend auf dem anfänglichen Leistungswert und den ausgewerteten Graddaten;

Aktualisieren des aktuellen Leistungsgrads des Benutzers basierend auf dem berechneten aktuellen Leistungswert; und

Erzeugen einer Vielzahl von Empfehlungen an den Benutzer basierend auf dem aktuellen Leistungsgrad, wenn der Übereinstimmungswert negativ ist.

9. System nach Anspruch 8, wobei der anfängliche Leistungswert basierend auf einer anfänglichen Beurteilung des Benutzers durch Folgendes vorberechnet wird:

Empfangen von Projektspezifikationsinformationen, die dem Benutzer zugeordnet sind;

Erzeugen einer Vielzahl von projektspezifischen Fragebögen basierend auf den Projektspezifikationsinformationen;

Erhalten einer Antwort von dem Benutzer für die Vielzahl von projektspezifischen Fragebögen; und

Berechnen des anfänglichen Leistungswerts, der dem Benutzer zugeordnet ist, basierend auf der erhaltenen Antwort.

10. System nach Anspruch 8, wobei der Peer-Lernwert dem Benutzer bereitgestellt wird, wenn ein Vorschlag, der durch den Benutzer zum Strukturieren der Vielzahl von Empfehlungen an den Benutzer gegeben wird, in einem Wissensspeicher enthalten ist, und wobei der Peer-Bewertungswert dem Benutzer bereitgestellt wird, während eine Bewertung von mindestens einem Benutzer aus einer Vielzahl von anderen Benutzern für einen Beitrag zu dem Wissensspeicher empfangen wird.

11. System nach Anspruch 8, wobei der Gradsprungwert basierend auf einer Vielzahl von aufeinanderfolgenden korrekten Programmieroperationen berechnet wird, die durch den Benutzer durchgeführt werden.

12. System nach Anspruch 8, wobei der Nutzungswert basierend auf einer Anzahl von greifbaren Aktionen berechnet wird, die durch den Benutzer in einem Werkzeug durchgeführt werden, das den Blockchain-Operationen zugeordnet ist, und wobei der Gewichtungswert basierend auf einer Komplexität vorbestimmt wird, die jeder der Vielzahl von Aktionen zugeordnet ist.

13. System nach Anspruch 8, wobei ein Fehlerspeicher dynamisch aktualisiert wird, wenn der Übereinstimmungswert negativ ist.

14. System nach Anspruch 8, ferner umfassend das dynamische Aktualisieren des Wissensspeichers, wenn der Übereinstimmungswert negativ ist, umfassend:

Empfangen einer Vielzahl von Benutzerfehlern und der entsprechenden Vielzahl von Empfehlungen, die dem Benutzer bereitgestellt werden, wobei die Vielzahl von Benutzerfehlern durch den Benutzer festgeschrieben wird;

Vergleichen jedes der Vielzahl von Benutzerfehlern und einer Vielzahl von Fehlern, die in dem Fehlerspeicher gespeichert sind, unter Verwendung einer Musterübereinstimmungstechnik;

Aktualisieren des Fehlerspeichers mit jedem der Vielzahl von Benutzerfehlern, wenn es keine Übereinstimmung zwischen jedem der Vielzahl von Benutzerfehlern und der Vielzahl von Fehlern gibt, die in dem Fehlerspeicher gespeichert sind; und

gleichzeitiges Aktualisieren der entsprechenden Vielzahl von Empfehlungen, die jedem der Vielzahl von Benutzerfehlern im Fehlerspeicher zugeordnet sind.

15. Ein oder mehrere nichtflüchtige maschinenlesbare Informationsspeichermedien, umfassend eine oder mehrere Anweisungen, die, wenn sie von einem oder mehreren Hardwareprozessoren ausgeführt werden, bewirken:

Empfangen einer Blockchain-Operation, die von einem Benutzer durchgeführt wird, wobei die Blockchain-Operation eine Vielzahl von Aktionen umfasst, wobei der Benutzer mit einem Benutzerprofil assoziiert ist, das eine Benutzer-ID, einen aktuelle Leistungsgrad, Aktivitätsdaten, Stufendaten, einen anfänglichen Leistungswert und einen aktuellen Leistungswert umfasst, wobei jede der Vielzahl von Aktionen mit einer entsprechenden Gewichtung assoziiert ist;

Erzeugen eines Übereinstimmungswerts basierend auf einem Vergleich zwischen jeder der Vielzahl von Aktionen und einer Vielzahl von vordefinierten Aktionen, die mit der entsprechenden Blockchain-Operation assoziiert sind, wobei der erzeugte Übereinstimmungswert eines ist von:

positiv, wenn es eine Übereinstimmung zwischen der Vielzahl von Aktionen und der Vielzahl von vordefinierten Aktionen gibt, und

negativ, wenn es keine Übereinstimmung zwischen der Vielzahl von Aktionen und der Vielzahl von vordefinierten Aktionen gibt;

Aktualisieren der Aktivitätsdaten basierend auf dem Übereinstimmungswert, wobei die Aktivitätsdaten ein Byte-Array sind, das eine Vielzahl von Bits umfasst, wobei jedes der Vielzahl von Bits jeder der Vielzahl von Aktionen entspricht, die mit der Blockchain-Operation assoziiert sind, und wobei eine "1" in dem Byte-Array eine erfolgreiche Aktion angibt und eine "0" in dem Byte-Array eine nicht erfolgreiche Aktion darstellt;

Berechnen des Aktivitätsgrads basierend auf den aktualisierten Aktivitätsdaten und der entsprechenden Gewichtung, die mit jeder der Vielzahl von Aktionen assoziiert ist;

Auswerten der Graddaten basierend auf dem Aktivitätsgrad, wobei die Graddaten den Aktivitätsgrad, einen Gradsprungwert, einen Nutzungswert, einen Peer-Lernwert und einen Peer-Wertschätzung umfassen;

Berechnen eines aktuellen Leistungswerts basierend auf dem anfänglichen Leistungswert und den ausgewerteten Graddaten;

Aktualisieren des aktuellen Leistungsgrads des Benutzers basierend auf dem berechneten aktuellen Leistungswert; und

Erzeugen einer Vielzahl von Empfehlungen an den Benutzer basierend auf dem aktuellen Leistungsgrad, wenn der Übereinstimmungswert negativ ist.

**Revendications**

1. Procédé mis en oeuvre par processeur (200), le procédé comprenant les étapes ci-dessous consistant à :

recevoir (202), par le biais d'un ou plusieurs processeurs matériels, une opération de chaîne de blocs mise en oeuvre par un utilisateur, dans laquelle l'opération de chaîne de blocs comprend une pluralité d'actions, dans lequel l'utilisateur est associé à un profil d'utilisateur comprenant un identifiant, ID, d'utilisateur, une note de compétence en cours, des données d'activité, des données de note, une valeur de compétence initiale et une valeur de compétence en cours, dans lequel chacune de la pluralité d'actions est associée à une pondération correspondante ;

générer (204), par le biais dudit un ou desdits plusieurs processeurs matériels, une valeur de correspondance sur la base d'une comparaison entre chacune de la pluralité d'actions et une pluralité d'actions prédéfinies associées à l'opération de chaîne de blocs correspondante, dans laquelle la valeur de correspondance générée est l'une parmi :

une valeur positive, s'il existe une correspondance entre la pluralité d'actions et la pluralité d'actions prédéfinies ; et

une valeur négative, s'il n'existe pas de correspondance entre la pluralité d'actions et la pluralité d'actions prédéfinies ;

mettre à jour (206), par le biais dudit un ou desdits plusieurs processeurs matériels, les données d'activité, sur la base de la valeur de correspondance, dans lesquelles les données d'activité correspondent à un tableau d'octets comprenant une pluralité de bits, dans lequel chaque bit de la pluralité de bits correspond à chacune de la pluralité d'actions associées à l'opération de chaîne de blocs et dans lequel un « 1 » dans le tableau d'octets indique une action réussie et un « 0 » dans le tableau d'octets représente une action non réussie ;

calculer (208), par le biais dudit un ou desdits plusieurs processeurs matériels, la note d'activité sur la base des données d'activité mises à jour et de la pondération correspondante associée à chacune de la pluralité d'actions ;

évaluer (210), par le biais dudit un ou desdits plusieurs processeurs matériels, les données de note, sur la base de la note d'activité, dans lesquelles les données de note comprennent la note d'activité, une valeur de saut de note, une valeur d'utilisation, une valeur d'apprentissage par les pairs et une valeur d'appréciation par les pairs ;

calculer (212), par le biais dudit un ou desdits plusieurs processeurs matériels, une valeur de compétence en cours, sur la base de la valeur de compétence initiale et des données de note évaluées ;

mettre à jour (214), par le biais dudit un ou desdits plusieurs processeurs matériels, la note de compétence en cours de l'utilisateur, sur la base de la valeur de compétence en cours calculée ; et

générer (216), par le biais dudit un ou desdits plusieurs processeurs matériels, une pluralité de recommandations à l'utilisateur, sur la base de la note de compétence en cours, lorsque la valeur de correspondance est négative.

2. Procédé selon la revendication 1, dans lequel la valeur de compétence initiale est précalculée sur la base d'une évaluation initiale de l'utilisateur, en mettant en oeuvre les étapes ci-dessous consistant à :

recevoir des informations de spécification de projet associées à l'utilisateur ;
générer une pluralité de questionnaires spécifiques au projet sur la base des informations de spécification de projet ;
obtenir une réponse de l'utilisateur pour la pluralité de questionnaires spécifiques au projet ; et
calculer la valeur de compétence initiale associée à l'utilisateur sur la base de la réponse obtenue.

3. Procédé selon la revendication 1, dans lequel la valeur d'apprentissage par les pairs est fournie à l'utilisateur lorsqu'une suggestion donnée par l'utilisateur pour structurer la pluralité de recommandations fournies à l'utilisateur est incluse dans un référentiel de connaissances et, dans lequel la valeur d'appréciation par les pairs est fournie à l'utilisateur lors de la réception d'une appréciation provenant d'au moins un utilisateur d'une pluralité d'autres utilisateurs en ce qui concerne une contribution au référentiel de connaissances.

4. Procédé selon la revendication 1, dans lequel la valeur de saut de note est calculée sur la base d'une pluralité d'opérations de programmation correctes consécutives mises en oeuvre par l'utilisateur.

5. Procédé selon la revendication 1, dans lequel la valeur d'utilisation est calculée sur la base d'un nombre d'actions tangibles mises en oeuvre par l'utilisateur dans un outil associé aux opérations de chaîne de blocs.

6. Procédé selon la revendication 1, dans lequel la valeur de pondération est prédéterminée sur la base d'une complexité associée à chacune de la pluralité d'actions et, dans lequel un référentiel d'erreurs est mis à jour dynamiquement lorsque la valeur de correspondance est négative.

7. Procédé selon la revendication 1, comprenant en outre l'étape consistant à mettre à jour le référentiel de connaissances dynamiquement lorsque la valeur de correspondance est négative, ladite étape de mise à jour comprenant les étapes ci-dessous consistant à :

recevoir une pluralité d'erreurs d'utilisateur et la pluralité de recommandations correspondante fournies à l'utilisateur, dans laquelle la pluralité d'erreurs d'utilisateur est commise par l'utilisateur ;
comparer chaque erreur de la pluralité d'erreurs d'utilisateur et une pluralité d'erreurs stockées dans le référentiel d'erreurs, en faisant appel à une technique de mise en correspondance de motifs ;
mettre à jour le référentiel d'erreurs avec chaque erreur de la pluralité d'erreurs d'utilisateur lorsqu'il n'existe pas de correspondance entre chaque erreur de la pluralité d'erreurs d'utilisateur et la pluralité d'erreurs stockées dans le référentiel d'erreurs ; et
mettre à jour simultanément la pluralité de recommandations correspondante associées à chaque erreur de la pluralité d'erreurs d'utilisateur dans le référentiel d'erreurs.

8. Système (100), comprenant en outre :

au moins une mémoire (104) stockant des instructions programmées ;
une ou plusieurs interfaces d'entrée/sortie (I/O) (112) ; et
un ou plusieurs processeurs matériels (102), couplés fonctionnellement à ladite au moins une mémoire (104), dans lesquels ledit un ou lesdits plusieurs processeurs matériels (102) sont configurés, par les instructions programmées, de manière à mettre en oeuvre les étapes ci-dessous consistant à :

recevoir une opération de chaîne de blocs mise en oeuvre par un utilisateur, dans laquelle l'opération de chaîne de blocs comprend une pluralité d'actions, dans lequel l'utilisateur est associé à un profil d'utilisateur comprenant un identifiant, ID, d'utilisateur, une note de compétence en cours, des données d'activité, des données de note, une valeur de compétence initiale et une valeur de compétence en cours, dans lequel chacune de la pluralité d'actions est associée à une pondération correspondante ;

générer une valeur de correspondance sur la base d'une comparaison entre chacune de la pluralité d'actions et une pluralité d'actions prédéfinies associées à l'opération de chaîne de blocs correspondante, dans laquelle la valeur de correspondance générée est l'une parmi :

une valeur positive, s'il existe une correspondance entre la pluralité d'actions et la pluralité d'actions prédéfinies ; et

une valeur négative, s'il n'existe pas de correspondance entre la pluralité d'actions et la pluralité d'actions prédéfinies ;

mettre à jour les données d'activité, sur la base de la valeur de correspondance, dans lesquelles les données d'activité correspondent à un tableau d'octets comprenant une pluralité de bits, dans lequel chaque bit de la pluralité de bits correspond à chacune de la pluralité d'actions associées à l'opération de chaîne de blocs, et dans lequel un « 1 » dans le tableau d'octets indique une action réussie et un « 0 » dans le tableau d'octets représente une action non réussie ;

calculer la note d'activité sur la base des données d'activité mises à jour et de la pondération correspondante associée à chacune de la pluralité d'actions ;

évaluer les données de note, sur la base de la note d'activité, dans lesquelles les données de note comprennent la note d'activité, une valeur de saut de note, une valeur d'utilisation, une valeur d'apprentissage par les pairs et une valeur d'appréciation par les pairs ;

calculer une valeur de compétence en cours, sur la base de la valeur de compétence initiale et des données de note évaluées ;

mettre à jour la note de compétence en cours de l'utilisateur, sur la base de la valeur de compétence en cours calculée ; et

générer une pluralité de recommandations à l'utilisateur, sur la base de la note de compétence en cours, lorsque la valeur de correspondance est négative.

9. Système selon la revendication 8, dans lequel la valeur de compétence initiale est précalculée sur la base d'une évaluation initiale de l'utilisateur, en mettant en oeuvre les étapes ci-dessous consistant à :

recevoir des informations de spécification de projet associées à l'utilisateur ;

générer une pluralité de questionnaires spécifiques au projet sur la base des informations de spécification de projet ;

obtenir une réponse de l'utilisateur pour la pluralité de questionnaires spécifiques au projet ; et

calculer la valeur de compétence initiale associée à l'utilisateur sur la base de la réponse obtenue.

10. Système selon la revendication 8, dans lequel la valeur d'apprentissage par les pairs est fournie à l'utilisateur lorsqu'une suggestion donnée par l'utilisateur pour structurer la pluralité de recommandations fournies à l'utilisateur est incluse dans un référentiel de connaissances et, dans lequel la valeur d'appréciation par les pairs est fournie à l'utilisateur lors de la réception d'une appréciation provenant d'au moins un utilisateur d'une pluralité d'autres utilisateurs en ce qui concerne une contribution au référentiel de connaissances.

11. Système selon la revendication 8, dans lequel la valeur de saut de note est calculée sur la base d'une pluralité d'opérations de programmation correctes consécutives mises en oeuvre par l'utilisateur.

12. Système selon la revendication 8, dans lequel la valeur d'utilisation est calculée sur la base d'un nombre d'actions tangibles mises en oeuvre par l'utilisateur dans un outil associé aux opérations de chaîne de blocs et, dans lequel la valeur de pondération est prédéterminée sur la base d'une complexité associée à chacune de la pluralité d'actions.

13. Système selon la revendication 8, dans lequel un référentiel d'erreurs est mis à jour dynamiquement lorsque la valeur de correspondance est négative.

14. Système selon la revendication 8, comprenant en outre l'étape consistant à mettre à jour le référentiel de connaissances dynamiquement lorsque la valeur de correspondance est négative, ladite étape de mise à jour comprenant les étapes ci-dessous consistant à :

recevoir une pluralité d'erreurs d'utilisateur et la pluralité de recommandations correspondante fournies à l'utilisateur, dans laquelle la pluralité d'erreurs d'utilisateur est commise par l'utilisateur ;

comparer chaque erreur de la pluralité d'erreurs d'utilisateur et une pluralité d'erreurs stockées dans le référentiel d'erreurs, en faisant appel à une technique de mise en correspondance de motifs ;

mettre à jour le référentiel d'erreurs avec chaque erreur de la pluralité d'erreurs d'utilisateur lorsqu'il n'existe pas de correspondance entre chaque erreur de la pluralité d'erreurs d'utilisateur et la pluralité d'erreurs stockées dans le référentiel d'erreurs ; et

mettre à jour simultanément la pluralité de recommandations correspondante associées à chaque erreur de la pluralité d'erreurs d'utilisateur dans le référentiel d'erreurs.

15. Un ou plusieurs supports non transitoires de stockage d'informations lisibles par machine comprenant une ou plusieurs instructions qui, lorsqu'elles sont exécutées par le biais dudit un ou desdits plusieurs processeurs matériels, occasionnent la mise en oeuvre des étapes ci-dessous consistant à :

recevoir une opération de chaîne de blocs mise en oeuvre par un utilisateur, dans laquelle l'opération de chaîne de blocs comprend une pluralité d'actions, dans lequel l'utilisateur est associé à un profil d'utilisateur comprenant un identifiant, ID, d'utilisateur, une note de compétence en cours, des données d'activité, des données de note, une valeur de compétence initiale et une valeur de compétence en cours, dans lequel chacune de la pluralité d'actions est associée à une pondération correspondante ;

générer une valeur de correspondance sur la base d'une comparaison entre chacune de la pluralité d'actions et une pluralité d'actions prédéfinies associées à l'opération de chaîne de blocs correspondante, dans laquelle la valeur de correspondance générée est l'une parmi :

une valeur positive, s'il existe une correspondance entre la pluralité d'actions et la pluralité d'actions prédéfinies ; et

une valeur négative, s'il n'existe pas de correspondance entre la pluralité d'actions et la pluralité d'actions prédéfinies ;

mettre à jour les données d'activité, sur la base de la valeur de correspondance, dans lesquelles les données d'activité correspondent à un tableau d'octets comprenant une pluralité de bits, dans lequel chaque bit de la pluralité de bits correspond à chacune de la pluralité d'actions associées à l'opération de chaîne de blocs, et dans lequel un « 1 » dans le tableau d'octets indique une action réussie et un « 0 » dans le tableau d'octets représente une action non réussie ;

calculer la note d'activité sur la base des données d'activité mises à jour et de la pondération correspondante associée à chacune de la pluralité d'actions ;

évaluer les données de note, sur la base de la note d'activité, dans lesquelles les données de note comprennent la note d'activité, une valeur de saut de note, une valeur d'utilisation, une valeur d'apprentissage par les pairs et une valeur d'appréciation par les pairs ;

calculer une valeur de compétence en cours, sur la base de la valeur de compétence initiale et des données de note évaluées ;

mettre à jour la note de compétence en cours de l'utilisateur, sur la base de la valeur de compétence en cours calculée ; et

générer une pluralité de recommandations à l'utilisateur, sur la base de la note de compétence en cours, lorsque la valeur de correspondance est négative.

100

FIG. 1

200

receive a blockchain operation performed by a user, wherein the blockchain operation comprising a plurality of actions, wherein the user is associated with a user profile comprising a user id, a current proficiency grade, an activity data, a grade data, an initial proficiency value and a current proficiency value, wherein each of the plurality of actions are associated with a corresponding weightage ⟋ 202

generate a match value based on a comparison between each of the plurality of actions and a plurality of predefined actions associated with the corresponding blockchain operation, wherein the generated match value is one of a (i) positive if there is a match between the plurality of actions and the plurality of predefined actions (ii) negative if there is no match between the plurality of actions and the plurality of predefined actions ⟋ 204

update the activity data based on the match value, wherein the activity data is a byte array comprising a plurality of bits, wherein each of the plurality of bits corresponds to each of the plurality of actions associated with the blockchain operation and, wherein a "1" in the byte array indicates a successful action and a "0" in the byte array represents an unsuccessful action ⟋ 206

compute the activity grade based on the updated activity data and the corresponding weightage associated with each of the plurality of actions ⟋ 208

A

**FIG. 2A**

200

A

evaluate the grade data based on the activity grade, wherein the grade data comprising the activity grade, a grade jump value, a usage value, a peer learning value and a peer appreciation value — 210

compute a current proficiency value based on the initial proficiency value and the updated grade data — 212

update the current proficiency grade of the user based on the computed current proficiency value — 214

generate a plurality of recommendations to the user based on the current proficiency grade when the match value is negative — 216

**FIG. 2B**

**FIG. 3**

**EP 4 105 803 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202121026459

- US 2014325490 A